# EUROPÄISCHE PATENTSCHRIFT

(11) **EP 3 181 993 B1**
(45) Veröffentlichungstag und Bekanntmachung des Hinweises auf die Patenterteilung: **21.07.2021**
(21) Anmeldenummer: 16204685.8
(22) Anmeldetag: 16.12.2016
(51) Int. Cl.: F21S 41/19, F21S 41/39, F21S 43/19, F21S 43/37

(54) **VERFAHREN ZUR HERSTELLUNG EINER FORMSCHLÜSSIGEN VERBINDUNG ZWISCHEN ZWEI BAUTEILEN EINER KRAFTFAHRZEUGBELEUCHTUNGSVORRICHTUNG MITHILFE EINES BAUTEILSEITIGEN VERBINDUNGSELEMENTS**
METHOD FOR PRODUCING A FORM-FIT CONNECTION BETWEEN TWO COMPONENTS OF A MOTOR VEHICLE ILLUMINATION DEVICE USING A CONNECTING ELEMENT
PROCÉDÉ DE FABRICATION D'UNE LIAISON PAR COMPLÉMENTARITÉ DE FORME ENTRE DEUX COMPOSANTS D'UN DISPOSITIF D'ÉCLAIRAGE DE VÉHICULE AUTOMOBILE À L'AIDE D'UN ÉLÉMENT DE LIAISON CÔTÉ COMPOSANT

(30) Priorität: 18.12.2015 AT 510832015
(43) Veröffentlichungstag der Anmeldung: 21.06.2017
(73) Patentinhaber: ZKW Group GmbH, 3250 Wieselburg (AT)
(72) Erfinder: Berger, Martin, 3661 Artstetten (AT); Grafeneder, Markus, 3342 Opponitz (AT)
(74) Vertreter: Patentanwaltskanzlei Matschnig & Forsthuber OG

(56) Entgegenhaltungen:
- EP-A2- 2 213 934
- CN-U- 203 920 558
- DE-A1- 3 046 590
- DE-A1-102013 108 633
- GB-A- 2 062 958
- US-A- 2 768 283
- US-A1- 2007 109 806

## Beschreibung

Die Erfindung betrifft Verfahren zur Herstellung einer formschlüssigen Verbindung zwischen einem ersten Bauteil und einem zweiten Bauteil einer Kraftfahrzeugbeleuchtungsvorrichtung mithilfe eines Verbindungselements, welches seitens des zweiten Bauteils vorgesehen ist, wobei das erste Bauteil als ein tragendes Bauteil des zweiten Bauteils vorgesehen ist und eine Außenseite und eine Innenseite aufweist, wobei das erste Bauteil an der Außenseite einen Befestigungsbereich aufweist, welcher als eine Ausnehmung ausgebildet ist, die als ein sich auf der Innenseite öffnendes Durchgangsloch weitergeführt ist, wobei das Durchgangsloch einen der Innenseite abgewandten Schulterbereich aufweist. Darüber hinaus betrifft die Erfindung einen Bauteilverbund, welcher eine nach dem obengenannten Verfahren erzeugte formschlüssige Verbindung aufweist.

Des Weiteren betrifft die Erfindung eine Kraftfahrzeugbeleuchtungsvorrichtung mit einem solchen Bauteilverbund.

Die US 2 768 283 A offenbart eine Vorrichtung zur Befestigung eines Scheinwerfers an einem Kraftfahrzeug.

Vielen Kraftfahrzeugbeleuchtungsvorrichtungsbauteile werden heutzutage aus Kunststoff hergestellt. Zur Verbindung solcher Bauteile werden oft Rastverbindungen eingesetzt, weil diese weniger Montageaufwand erfordern. Bei Produktion von Bauteilen mit den entsprechenden Rastnasen entstehen allerdings höhere Werkzeugkosten und höherer Abstimmungsaufwand (von den Rastnasen) in der Serie für Montage.

Daher ist es die Aufgabe der vorliegenden Erfindung ein Verfahren zu schaffen, bei dem die Kosten gesenkt und der Abstimmungsaufwand der Rastnasen reduziert werden kann. Die Aufgabe wird mit einem Verfahren der eingangs genannten Art erfindungsgemäß gelöst, welches Verfahren die Schritte des Anspruchs 1 aufweist.

Hinsichtlich der Abdichtung der Ausnehmung wird die Ausnehmung mithilfe des zumindest einen Abdeckteils in Form einer Membran abgedeckt.

Hinsichtlich des Hineingelangens von Flüssigkeit ist vorgesehen, dass das zumindest eine Abdeckteil aus einem flüssigkeitsabdichtenden Material ausgebildet ist. Es kann vorgesehen sein, dass das Abdeckteil aus einem flüssigkeits- und luftabdichtenden oder einem luftabdichtenden Material ausgebildet ist.

Darüber hinaus ist vorgesehen, dass das Abdeckteil nach dem Abdecken der Ausnehmung über die Außenseite des ersten Bauteils nicht herausragt.

Des Weiteren kann es vorgesehen sein, dass das Verbindungselement getrennt von dem zweiten Bauteil ausgebildet ist.

Es kann außerdem zweckdienlich sein, das Verbindungselement als eine Schraube und das Endteil als ein Schraubenkopf ausgebildet ist, wobei das Durchführen der Schraube durch das Durchgangsloch ferner aufweist: b1) Durchführen eines dem Schraubenkopf gegenüberliegenden Endes der Schraube über die Außenseite des ersten Bauteils durch das Durchgangsloch, b2) Einschrauben der Schraube in das zweite Bauteil. Dabei wird eine Verbindung über die Außenseite des ersten Bauteils hergestellt. Eine Verbindung über die Innenseite, insbesondere eine Schraub- oder Nietverbindung, ist oft aufgrund technischer Vorgaben (beispielsweise Platzvorgaben und/oder lichttechnische Vorgaben) nicht erwünscht bzw. nicht möglich oder nicht erlaubt. So ist dies z.B. der Fall, wenn das erste Bauteil als ein Kühlkörper ausgebildet ist und als tragendes Bauteil für einen Reflektor (das zweite Bauteil) fungiert. Dabei ist eine Schraub- oder Nietverbindung über die Innenseite beispielsweise aus bauraumtechnischen Gründen oder aus dem Grund, dass die Verbindung im Sichtbereich positioniert ist und in diesem Fall das Lichtbild der Kraftfahrzeugbeleuchtungsvorrichtung stört, nicht möglich.

Weiters kann es vorgesehen sein, dass die Schraube ein Außengewinde aufweist und das zweite Bauteil auf einer der Innenseite des ersten Bauteils zugewandten Seite vorgelocht ist, wobei das Vorloch Innengewinde aufweist, wobei das Außengewinde und das Innengewinde ineinander laufbar sind, und das Einschrauben der Schraube in das zweite Bauteil ferner aufweist: b3) Ineingriffbringen des Außengewindes mit dem Innengewinde.

Ein vorgelochtes zweites Bauteil mit einem Innengewinde hat zum Vorteil, dass beim Verfahren nicht notwendigerweise selbstschneidende Schrauben eingesetzt werden müssen. Es können aber natürlich vorgelochte zweite Bauteile verwendet werden, bei denen das Vorloch kein Innengewinde aufweist. Darüber hinaus können auch nicht vorgelochte zweite Bauteile eingesetzt werden. In den letzten zwei Fällen (das zweite Bauteil vorgelocht aber das Vorloch weist kein Innengewinde auf oder das zweite Bauteil ist gar nicht vorgelocht) kann es zweckdienlich sein selbstschneidende Schrauben zu verwenden.

Bei einer weiteren Ausführungsform kann vorgesehen sein, dass das Verbindungselement als ein Niet und das Endteil als ein Nietkopf ausgebildet ist und das zweite Bauteil auf einer der Innenseite des ersten Bauteils zugewandten Seite vorgelocht ist, wobei das Verfahren ferner aufweist: b1) Durchführen eines dem Nietkopf gegenüberliegenden Endes des Niets über die Außenseite des ersten Bauteils durch das Durchgangsloch, b2) Einführen des dem Nietkopf gegenüberliegenden Endes des Niets in das vorgelochte zweite Bauteils, b3) Nieten des ersten Bauteils mit dem zweiten Bauteil.

Hinsichtlich der Reduzierung der Materialkosten kann es von Vorteil sein, dass das Verbindungselement mit dem zweiten Bauteil einstückig ausgebildet ist.

Dabei kann es bei der Herstellung der formschlüssigen Verbindung zweckdienlich sein, dass das Verbindungselement durch den Innenseitenöffnungsbereich des Durchgangslochs des ersten Bauteils in das Durchgangsloch eingeführt wird.

Bei einer weiteren Ausführungsform kann es vorgesehen sein, dass das Anlegen des Endteils des Verbindungselements an den Schulterbereich der Ausnehmung ferner aufweist: c1) Heißverstemmen des Endteils.

Bei einer anderen Ausführungsform kann es vorgesehen sein, dass das Anlegen des Endteils des Verbindungselements an den Schulterbereich der Ausnehmung ferner aufweist: c1) Laserschweißen des Endteils.

Darüber hinaus ist die Aufgabe mit einem Bauteilverbund gelöst, wobei das erste Bauteil als ein Gehäuse einer Fahrzeugleuchte und das zweite Bauteil als ein Tragrahmen ausgebildet ist.

Bei einer weiteren Ausführungsform kann vorgesehen sein, dass das erste Bauteil als ein Kühlkörper und das zweite Bauteil als ein Reflektor ausgebildet ist.

Die Erfindung ist nachfolgend anhand beispielhafter nichteinschränkender Ausführungsformen näher erörtert, die in einer Zeichnung veranschaulicht sind. In dieser zeigt:
Fig. 1 eine Rastverbindung nach dem Stand der Technik in einer Fahrzeugleuchte für Tagfahrlicht,
Fig. 2 eine Schnittdarstellung eines Gehäuses einer Fahrzeugleuchte für Tagfahrlicht,
Fig. 3 ein vergrößerter Ausschnitt der Schnittdarstellung des Gehäuses der Fig. 2,
Fig. 4 Schnittdarstellungen eines Tragrahmens der Fahrzeugleuchte für Tagfahrlicht und einer Schraube sowie ein Abdeckteil,
Fig. 5 der an dem Gehäuse angeordnete Tragrahmen in Schnittdarstellung,
Fig. 6 eine Detaildarstellung des Mithilfe der Schraube mit dem Tragrahmen verschraubten Gehäuses im Schnitt,
Fig. 7 eine mit dem Abdeckteil abgedeckte Ausnehmung des Gehäuses,
Fig. 8 das mithilfe der Schraube mit dem Tragrahmen verschraubte Gehäuse in perspektivischer Darstellung,
Fig. 9 eine vergrößerte Ansicht eines Befestigungsbereiches aus Fig. 8,
Fig. 10 ein Kühlkörper und einen Reflektor eines Kraftfahrzeugscheinwerfers in perspektivischer Darstellung,
Fig. 11 der an dem Kühlkörper angeordnete Reflektor, eine Schraube und ein Abdeckteil,
Fig. 12 der mit dem Kühlkörper mithilfe der Schraube verschraubte Reflektor,
Fig. 13 das mithilfe eines Niets mit dem Tragrahmen vernietetes Gehäuse,
Fig. 14 das mit dem Tragrahmen heißverstemmtes Gehäuse,
Fig. 15 das mit dem Tragrahmen laserverschweißtes Gehäuse,
Fig. 16 eine Fahrzeugleuchte in Explosionsdarstellung,
Fig. 17 ein Fahrzeugscheinwerferlichtmodul in Explosionsdarstellung.

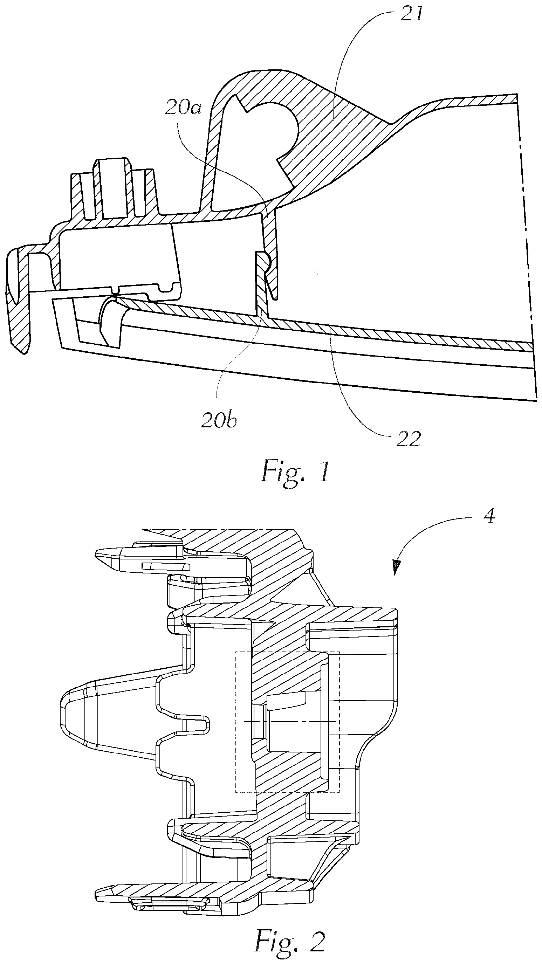

Zunächst wird auf Fig. 1 Bezug genommen. Diese zeigt eine herkömmliche Rastverbindung bei einer Fahrzeugleuchte für Tagfahrlicht. Die Fahrzeugleuchten umfassen in der Regel ein Gehäuse 21, einen Tragrahmen 22 für optisch relevante Bauteile (nicht gezeigt) und eine Abdeckscheibe (nicht gezeigt). Darüber hinaus soll für jeden Fachmann selbstverständlich sein, dass jede Fahrzeugleuchte auch andere Bauteile aufweist, die deren ordnungsgemäßes Funktionieren ermöglichen. Auf diese anderen Bauteile wird im Rahmen der vorliegenden Erfindung allerdings kein Bezug genommen, da sie für die Erfindung unwesentlich sind.

Wie Fig. 1 zeigt, ist das Gehäuse bei einer herkömmlichen Fahrzeugleuchte mithilfe einer Rastverbindung mit dem Tragrahmen verbunden. Dabei muss sowohl das Gehäuse 21 als auch der Tragrahmen 22 jeweils eine Rastnase 20a, 20b aufweisen, welche Rastnasen 20a, 20b beim Verbinden ineinander greifen und in einer vorbestimmten Position verrasten.

Dies ist nur ein Beispiel von mehreren, besonderes im Kfz-Bau verwendeten Rastverbindungen. Darüber hinaus ist wichtig zu erwähnen, dass die für die Rastverbindungen wesentlichen Rastnasen in der Produktionsserie aufeinander abgestimmt werden müssen. Wie eingangs bereits erwähnt bedarf die Produktion von Bauteilen mit den entsprechenden aufeinander abgestimmten Rastnasen eines komplizierten aufwendigen Werkzeugs und verursacht unentwegt Mehrkosten.

Erfindungsgemäß wird auf die Rastverbindung verzichtet und durch eine andere Art Verbindung ersetzt.

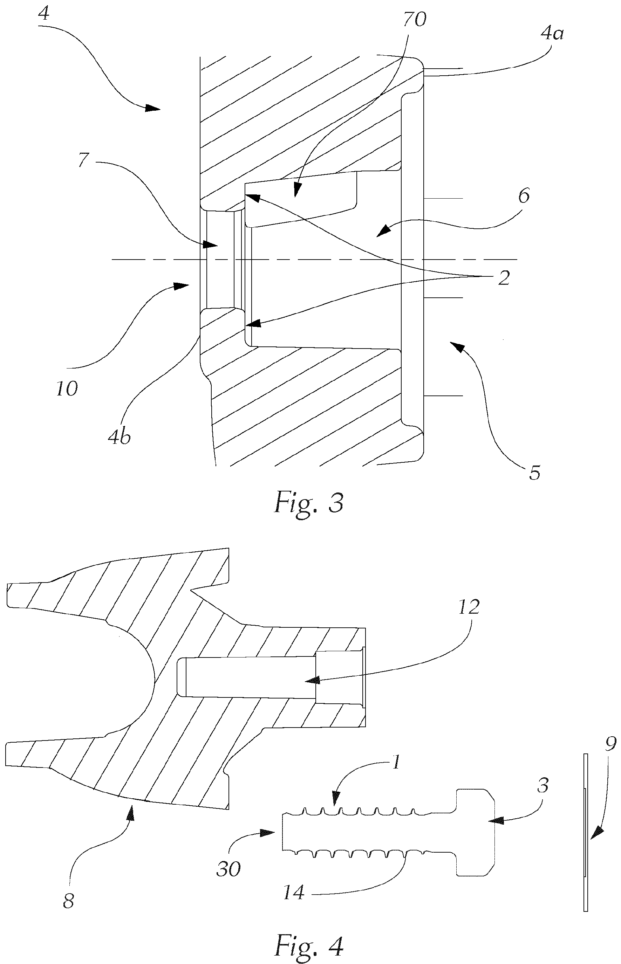

Fig. 2 bis Fig. 6 stellen die wesentlichen Schritte des erfindungsgemäßen Verfahrens an einem ersten Beispiel dar. Dabei wird eine formschlüssige Verbindung zwischen einem als ein Gehäuse einer Fahrzeugleuchte ausgebildeten ersten Bauteil 4 (Fig. 2 und Fig. 3) und einem zweiten als ein Tragrahmen (beispielsweise für optisch relevante Bauteile der Fahrzeugleuchte) einer Fahrzeugleuchte ausgebildeten zweiten Bauteil 8 mithilfe eines als eine Schraube ausgebildeten Verbindungselements 1 (Fig. 4). Der Tragrahmen 8 wird mithilfe des erfindungsgemäßen Verfahrens an dem Gehäuse 4 befestigt, wobei das Gehäuse 4 eine tragende Funktion für den Tragrahmen 8 erfüllt.

Fig. 3 zeigt einen vergrößerten Ausschnitt der Fig. 2. In der Fig. 3 ist eine Außenseite 4a und eine Innenseite 4b zu sehen, wobei die Außenseite 4a einen Befestigungsbereich 5 aufweist, welcher als eine Ausnehmung 6 ausgebildet ist, die als ein sich auf der Innenseite 4b öffnendes Durchgangsloch 7 weitergeführt ist, wobei das Durchgangsloch 7 einen der Innenseite 4b abgewandten Schulterbereich 2 und einen Innenseitenöffnungsbereich 10 aufweist. Des Weiteren weist die Ausnehmung 6 fakultativ eine oder mehr Luftstromöffnungen 70 auf. Diese können dazu dienen, die Zirkulation der Luft im Inneren der Fahrzeugleuchte zu regulieren und durch Erhitzen im Inneren der Fahrzeugleuchte entstandene warme Luft nach außen der Fahrzeugleuchte abzuführen. Die Luftstromöffnungen sind vor allem dann wichtig, wenn die Ausnehmung 6 als eine Belüftungsöffnung der Fahrzeugleuchte ausgebildet ist. Darüber hinaus ist in der Fig. 4 ein der Ausnehmung 6 zugeordnetes fakultatives Abdeckteil 9, beispielsweise eine Membran, zu sehen. Das Abdeckteil 9, welches beispielsweise aus einem flüssigkeitsdichten oder flüssigkeits- und luftdichten Material ausgebildet sein kann, dient dazu das Hineingelangen von Flüssigkeit (beispielsweise Wasser) oder von Flüssigkeit und Luft von der Außenseite 4a in die Ausnehmung 6 zu verhindern. Verwendet man allerdings korrosionsbeständige Verbindungselemente (beispielsweise Schrauben oder, wie unten beschrieben, Nieten) und/oder ist die Ausnehmung 6 nicht als eine Belüftungsöffnung ausgebildet, so besteht keine Notwendigkeit auf das Hineingelangen von Flüssigkeit oder Flüssigkeit und Luft in die Ausnehmung 6 abzustellen und diese mit einem Abdeckteil 9 der oben genannten Art abzudichten

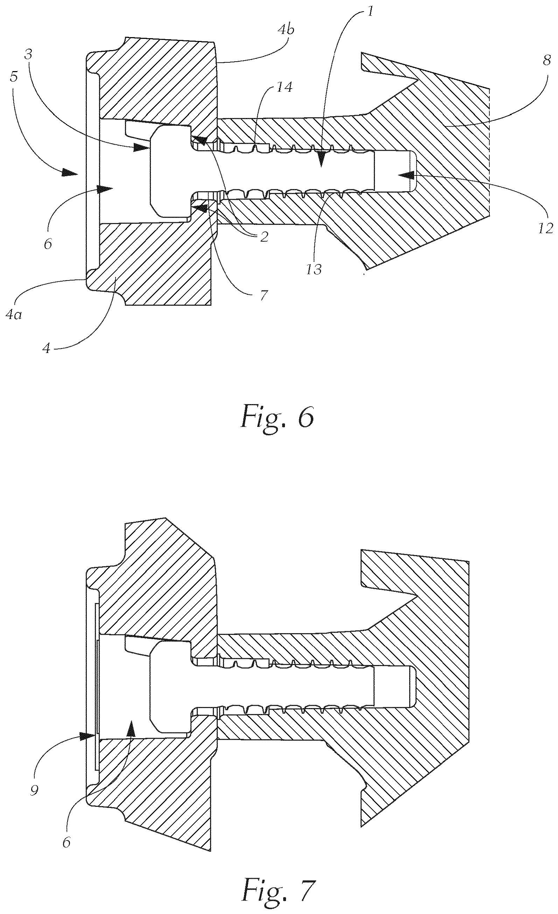

Fig. 4 zeigt einen mit einem Vorloch 12 vorgelochten Tragrahmen 8, wobei das Vorloch als ein Sackloch 12 ausgebildet ist, wobei das Sackloch 12 ein Innengewinde 13 (siehe Fig. 6) aufweisen kann. Darüber hinaus ist in der Fig. 4 eine Schraube 1 zu sehen, deren Stift ein Außengewinde 14 aufweist und einseitig in einen Schraubenkopf 3 (Endteil des Verbindungselements) mündet, und, wie bereits erwähnt, ein Abdeckteil 9. Dabei muss der Tragrahmen 8 nicht vorgelocht sein. Es ist durchaus vorstellbar einen nichtvorgelochten Tragrahmen 8 zu verwenden. Bei einem nichtvorgelochten Tragrahmen oder bei einem vorgelochten Tragrahmen, bei welchem das Vorloch kein Innengewinde aufweist, ist es zweckdienlich eine selbstschneidende Schraube zu verwenden.

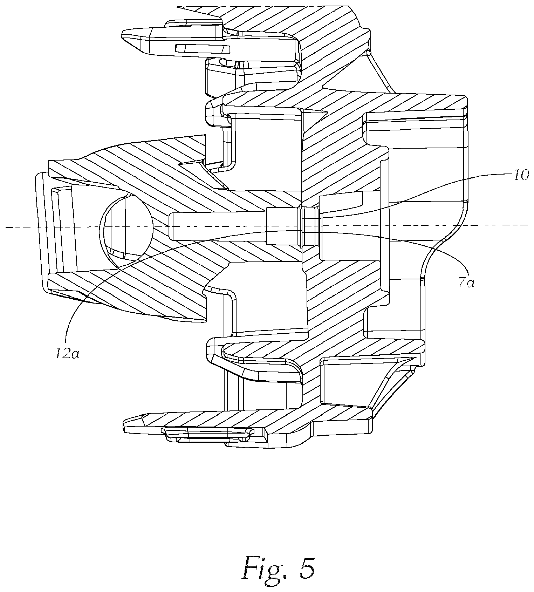

Fig. 5 zeigt einen ersten Schritt - Schritt a) - des Verfahrens, bei dem der Tragrahmen 8 an dem Innenseitenöffnungsbereich 10 des Durchgangslochs 7 des Gehäuses 4 angeordnet wird. Dabei ist bei einer Verbindung mithilfe der Schraube 1 vorteilhaft, wenn der Durchmesser des Durchgangslochs 7 und der Durchmesser zumindest eines sich auf einer Seite des Tragrahmens 8 öffnenden Sacklochs 12 gleich sind und die Ränder 12a einer Sacklochöffnung an die Ränder 7a einer Durchgangslochöffnung des Durchgangslochs 7 im Innenseitenöffnungsbereich angelegt werden.

In einem weiteren Schritt b) wird das Verbindungselement 1, in diesem Ausführungsbeispiel - die Schraube 1, durch das Durchgangsloch 7 durchgeführt. Dabei ist es bei diesem Ausführungsbeispiel wichtig, dass das Durchführen eines dem Schraubenkopf 3 gegenüberliegenden Endes 30 der Schraube 1 über die Außenseite 4a des ersten Bauteils 4 durch das Durchgangsloch 7 geschieht und die Herstellung einer Verbindung von der Außenseite 4a des Gehäuses 4 der Fahrzeugleuchte erfolgt. Im Gegenteil zu einer Verbindung über die Innenseite 4b hat die Verbindung über die Außenseite 4a zweierlei Vorteile: Erstens ist die Schraube in Sichtbereich der Fahrzeugleuchte nicht zulässig, zweitens ist kein Platz außerhalb vom Sichtbereich vorhanden. In dem nächsten Schritt b2) wird die Schraube 1 in den Tragrahmen 8 eingeschraubt. Wie oben bereits erwähnt können an dieser Stellen verschiedene Typen von Schrauben verwendet werden, je nachdem ob der Tragrahmen 8 bereits vorgelocht ist und das Vorloch 12 ein Innengewinde 13 aufweist. Bei einer selbstschneidenden Schraube schneidet sie beim Einschrauben ein Vorloch 12, wenn ein solches noch nicht vorhanden ist, und ein Innengewinde 13 in den Tragrahmen 8 (Fig. 6). Dabei wird, wie in Fig. 6 gezeigt ist, das Gehäuse 4 an dem Tragrahmen 8 durch Anlegen des Schraubenkopfs 3 an den Schulterbereich 2 der Ausnehmung 6 festgelegt.

In einem weiteren optionalen Schritt d) wird die Ausnehmung 6 mithilfe des Abdeckteils 9, beispielsweise einer Membran abgedeckt (Fig. 7). Dabei kann es aus oben genannten Gründen vorteilhaft sein, wenn das Abdeckteil 9 aus einem flüssigkeitsdichten Material ausgebildet ist und die Ausnehmung 6 flüssigkeitsdicht abdichtet. Darüber hinaus ist auch eine flüssigkeits- und luftdichte Abdichtung der Ausnehmung 6 mithilfe eines flüssigkeits- und luftdichten Abdeckteils 9 vorstellbar. Dadurch wird Hineingelangen von Flüssigkeit oder von Flüssigkeit und Luft von der Außenseite 4a auf die Innenseite 4b und folglich auf den Tragrahmen 8 und ins Innere der Fahrzeugleuchte im Wesentlichen vermieden.

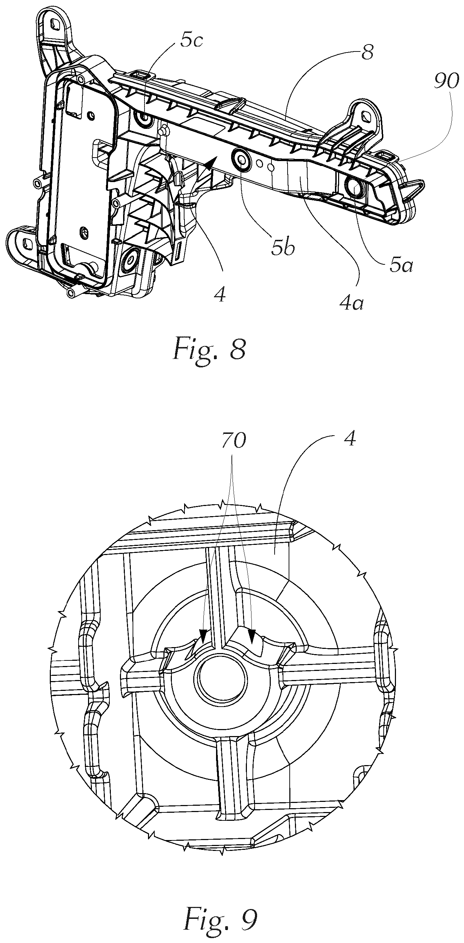

Fig. 8 zeigt das mithilfe der Schraube 1 mit dem Tragrahmen 8 verschraubte Gehäuse 4 in perspektivischer Darstellung. Das Gehäuse 4 weist drei als Belüftungsöffnungen 5a, 5b, 5c ausgebildete Befestigungsbereiche. Die Belüftungsöffnung 5a ist beispielsweise mit einem flüssigkeits- und luftdichten oder mit einem flüssigkeitsdichten Abdeckteil 90 abgedichtet. Damit die Belüftung der Fahrzeugleuchte nicht beeinträchtigt wird, können die bereits oben erwähnten Luftstromöffnungen 70 vorgesehen sein, welche bei einer als eine Belüftungsöffnung ausgebildeten Ausnehmung 6 wichtig sind. In Fig. 9 ist eine vergrößerte der Belüftungsöffnung 5a von der der Außenseite 4a gegenüberliegenden Seite gezeigt. Darin sind zwei oben genannten Luftstromöffnungen 70 zu sehen im Gehäuse 4 zu sehen.

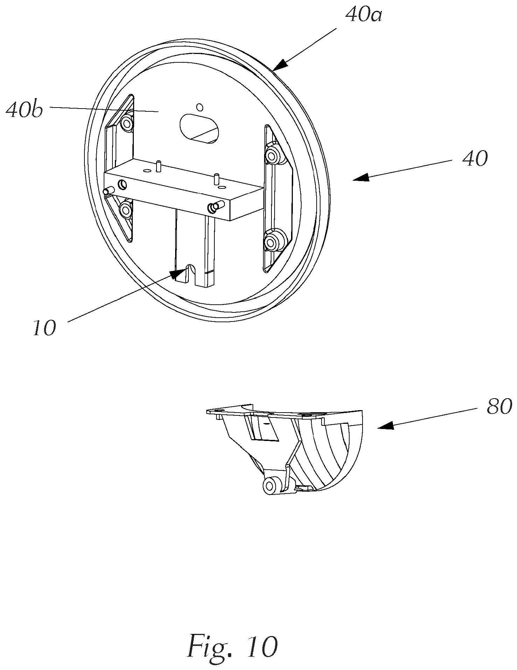

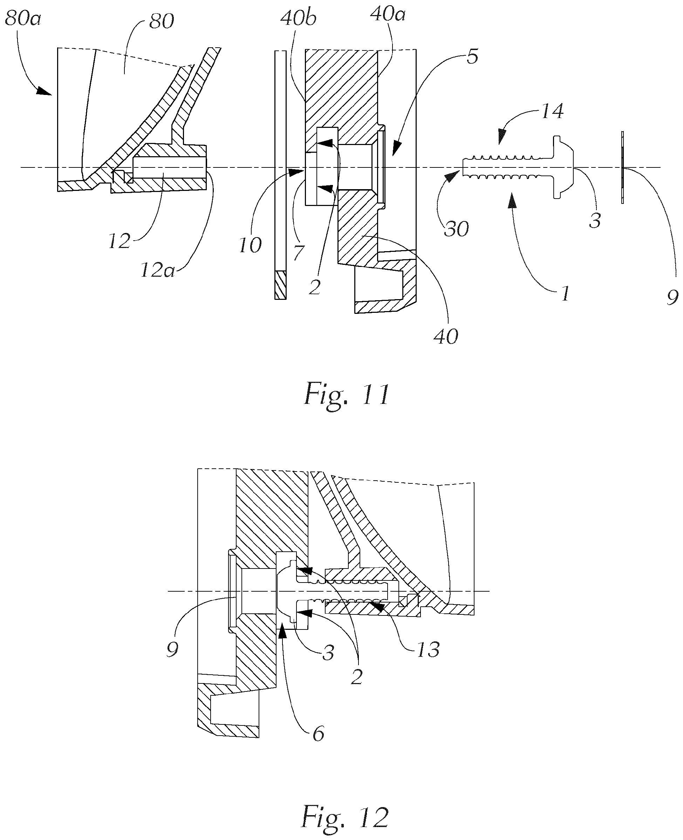

In den Figuren 10 bis 12 ist ein weiteres Ausführungsbeispiel der Erfindung dargestellt. Dabei ist das zweite Bauteil als ein Reflektor 80 und das erste Bauteil als ein den Reflektor 80 tragender Kühlkörper 40 ausgebildet. Fig. 10 zeigt den Kühlkörper 40, der eine Außenseite 40a, eine Innenseite 40b und einen Innenseitenöffnungsbereich 10 aufweist, und den Reflektor 80 jeweils in perspektivischer Ansicht. Fig. 11 zeigt den Reflektor 80, den Kühlkörper 40, eine Schraube 1 und ein wiederum optionales Abdeckteil 9 in Seitenansicht. Der Reflektor 80 weist ein Vorloch 12, welches als ein Durchgangsloch ausgebildet ist, und eine reflektierende Fläche 80a auf. Der Reflektor wird am Innenseitenöffnungsbereich 10 eines Durchgangslochs 7 des Kühlkörpers 40 angeordnet (Schritt a)), wobei die reflektierende Fläche 80a von der Innenseite 40b des Kühlkörpers abgewandt ist, sodass ein Vorlochöffnungsbereich 12a des Vorlochs 12 dem Innenseitenöffnungsbereich 10 des Durchgangslochs 7 des Kühlkörpers 40 zugewandt ist, sodass das Vorloch 12 gegenüber dem Durchgangsloch 7 angeordnet ist. Dabei kann es vorgesehen sein, dass das Vorloch 12 und das Durchgangsloch 7 gleiche Durchmesser aufweisen. Die Schraube 1 wird derart eingesetzt, dass das Durchführen eines dem Schraubenkopf 3 gegenüberliegenden Endes 30 der Schraube 1 über die Außenseite 40a des Kühlkörpers 40 durch das Durchgangsloch 7 erfolgt, um das Verbinden des Kühlkörpers 40 mit dem Reflektor 80 von der Außenseite 40a des Kühlkörpers 40 zu ermöglichen. Im Gegenteil zu einer Verbindung über die Innenseite 40b hat die Verbindung über die Außenseite 40a auch bei diesem Ausführungsbeispiel zweierlei Vorteile: Erstens ist die Schraube 1 im Sichtbereich des Reflektors 80 nicht zulässig, zweitens ist kein Platz für eine Verbindung über die Innenseite 40b außerhalb vom Sichtbereich des Reflektors 80 vorhanden. In einem nachfolgenden Schritt b2) wird die Schraube 1 in den Reflektor 80 eingeschraubt. Wie oben bereits erwähnt können an dieser Stellen verschiedene Typen von Schrauben verwendet werden, je nachdem ob der Reflektor 80 bereits vorgelocht ist und das Vorloch 12 (wie in Fig. 11 gezeigt) ein Innengewinde 13 (in Fig. 11 nicht gezeigt) aufweist. Bei einer selbstschneidenden Schraube schneidet sie beim Einschrauben ein Vorloch 12 (nicht gezeigt), wenn ein solches noch nicht vorhanden ist, in den Reflektor 80. Bei einem ein Vorloch 12 ohne Innengewinde aufweisenden Reflektor 80 schneidet die Schraube ein Innengewinde 13 in die Wände des Vorlochs 12 des Reflektors 80 (Fig. 12). Dabei wird, wie in Fig. 12 gezeigt ist, der Kühlkörper 40 an dem Reflektor 80 durch Anlegen des Schraubenkopfs 3 an den Schulterbereich 2 der Ausnehmung 6 festgelegt.

In einem weiteren fakultativen Schritt d) wird die Ausnehmung 6 mithilfe des Abdeckteils 9, beispielsweise einer Membran abgedeckt (Fig. 12). Dabei ist es vorteilhaft, wenn das Abdeckteil 9 aus einem flüssigkeitsdichten Material ausgebildet ist und die Ausnehmung 6 flüssigkeitsdicht abdichtet. Darüber hinaus ist auch eine flüssigkeits- und luftdichte Abdichtung der Ausnehmung 6 mithilfe eines flüssigkeits- und luftdichten Abdeckteils 9 vorstellbar. Dadurch wird Hineingelangen von Flüssigkeit oder von Flüssigkeit und Luft von der Außenseite 40a auf die Innenseite 40b und folglich auf den Reflektor 80 und ins Innere der Fahrzeuglichtmoduls im Wesentlichen vermieden.

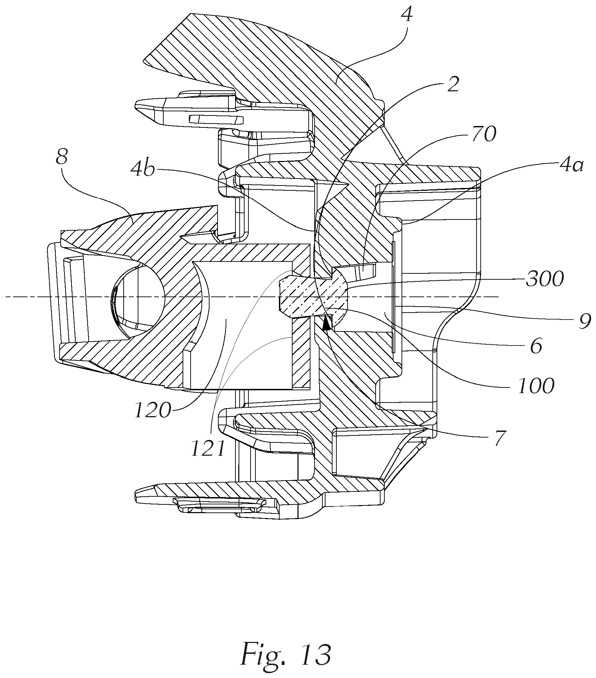

Fig. 13 zeigt das Ergebnis des erfindungsgemäßen Verfahrens, bei dem das erste Bauteil wiedermal als ein Gehäuse 4 und das zweite Bauteil als ein Tragrahmen 8 ausgebildet ist, wobei das Verbindungselement als ein Niet 100 ausgebildet ist. Weiterhin weit der Tragrahmen 8 ein Vorloch 120, welches im dem Gehäuse 4 zugewandten Bereich einen Vorloch-Schulterbereich 121 aufweist, der zur Erzeugung einer formschlüssigen Verbindung beim Nieten verwendet werden kann. Dabei wird der Niet 100 mit dem einem Nietkopf 300 gegenüberliegenden Ende durch das Durchgangsloch 7, das sich auf der Innenseite 4b öffnet und als eine Weiterführung der Ausnehmung 6 in einem Befestigungsbereich 5 des Gehäuses 4 ausgebildet ist, durchgeführt wird und in das Vorloch 120 eingeführt wird.

Anschließend wird das Gehäuse 4 mit dem Tragrahmen 8 genietet. Danach kann die Ausnehmung 6 mit einem Abdeckteil, wie oben beschrieben, abgedeckt werden. Ob die Ausnehmung mit einem Abdeckteil abgedeckt wird oder nicht, hängt nicht davon ab, ob das Verbindungselement als eine Schraube oder als ein Niet ausgebildet ist, sondern nur davon, ob die Ausnehmung als eine Belüftungsöffnung ausgebildet ist und/oder ob das Verbindungselement aus einem korrosionsbeständigen Material ausgebildet ist. Beispielsweise bei einem aus einem korrosionsbeständigen Material ausgebildeten Verbindungselement und bei einer Ausnehmung ohne Belüftungsöffnung ist kein Abdeckteil notwendig.

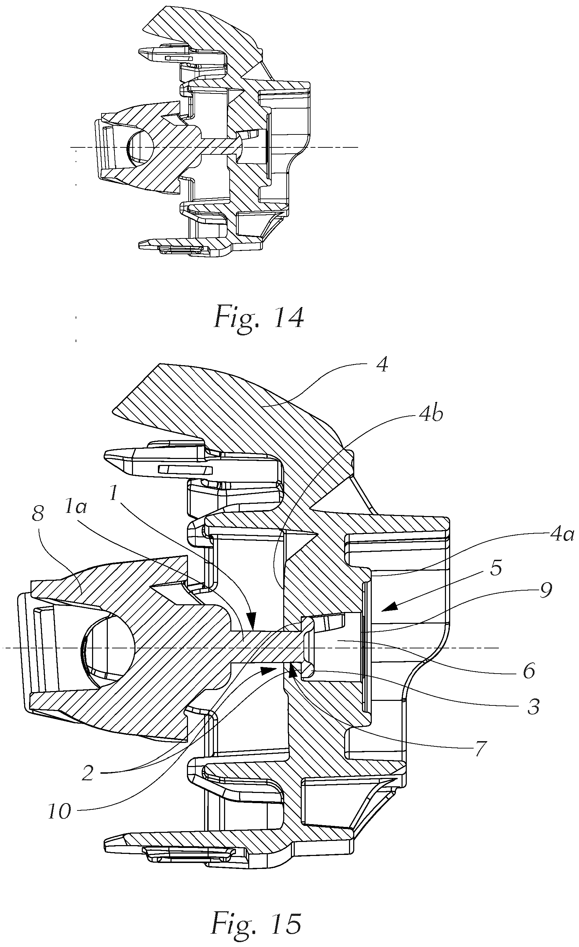

Figuren 14 und 15 zeigen Ergebnisse zwei weiterer Varianten des erfindungsgemäßen Verfahrens, wobei das Verbindungselement 1 in beiden gezeigten Fällen als ein Vorsatz des zweiten Bauteils - in diesen Beispielen des Tragrahmens 8, d.h. mit dem Tragrahmen 8 einstückig, ausgebildet ist. Zunächst wird auf Fig. 14 Bezug genommen. Diese zeigt einen an einem Innenseitenöffnungsbereich 10 des Durchgangslochs 7 des ersten Bauteils - in diesen Beispielen des Gehäuses 4 angeordneten Tragrahmen 8. Wobei der Tragrahmen 8 ist an dem Innenseitenöffnungsbereich derart angeordnet wird, dass das in diesem Schritt mit dem Stift des Verbindungselements 1 gleich ausgebildete Endteil (nicht gezeigt) von der Innenseite 4b des Gehäuses 4 aus durch das Durchgangsloch 7 des Gehäuses 4 durchgeführt werden kann. Nachdem das Endteil durch das Durchgangsloch 7 durchgeführt wird und in der Ausnehmung 6 aufgenommen ist, wird mithilfe von Heißverstemmen (Fig. 14) oder Laserschweißen (Fig. 15) aus dem Endteil ein im Wesentlichen domförmiges Endteil 3 ausgebildet, das an den Schulterbereich 2 der Ausnehmung 6 angelegt wird. Dadurch wird eine formschlüssige Verbindung gebildet. Anschließend kann die Ausnehmung 6, wie oben beschrieben, mit einem beispielsweise flüssigkeitsdichten oder flüssigkeits- und luftdichten Abdeckteil 9 abgedeckt werden.

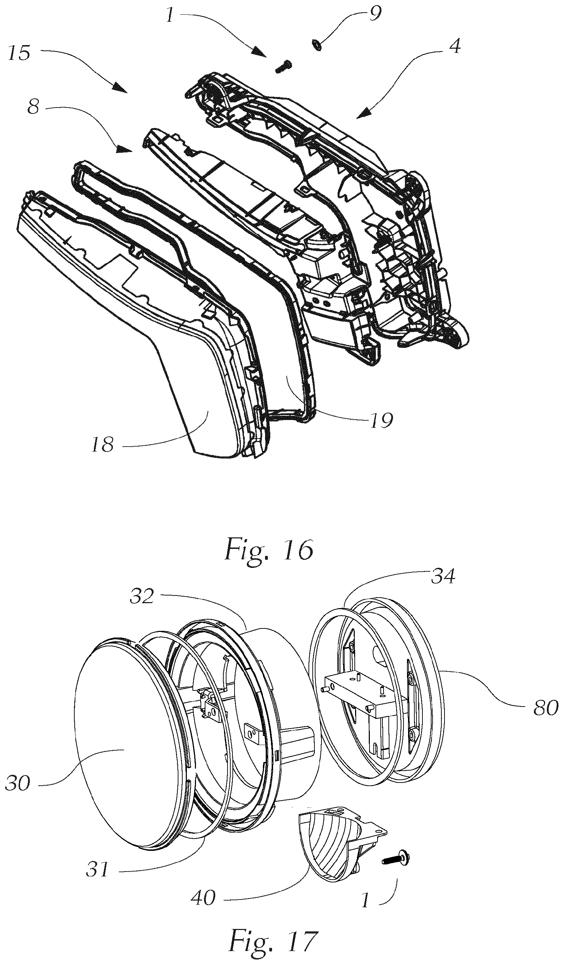

Abschließend zeigen Fig. 16 und Fig. 17 jeweils eine Fahrzeugbeleuchtungsvorrichtung, die einen mit dem erfindungsgemäßen Verfahren hergestellten Bauteilverbund aufweist. Dabei zeigt Fig. 16 eine Fahrzeugleuchte 15 in Explosionsdarstellung. Diese umfasst eine Abdeckscheibe 18, ein Gehäuse 4, einen Silikonkleber 19 (eine Silikonkleberschicht zum Abdichten der Fahrzeugleuchte) und einen Tragrahmen 8. Darüber hinaus sind auch eine Schraube 1 und ein fakultatives Abdeckteil 9 zu sehen.

Fig. 17 zeigt die wichtigsten Komponenten eines Fahrzeugscheinwerferlichtmoduls in Explosionsdarstellung. Darin ist zu sehen: eine Linse 30, ein erster Silikonkleber 31 (eine erste Silikonkleberschicht), ein Gehäuse 32, ein als ein Reflektor 40 ausgebildetes zweites Bauteil, ein zweiter Silikonkleber 34 (eine zweite Silikonkleberschicht), ein als ein Kühlkörper 80 ausgebildetes erstes Bauteil, eine Schraube 1. Das optionale Abdeckteil 9 ist nicht dargestellt.

Eine formschlüssige Verbindung zwischen dem Gehäuse und dem Tragrahmen (Fig. 16) oder zwischen dem Kühlkörper und dem Reflektor (Fig. 17) wird gemäß dem oben genannten Verfahren hergestellt.

Die in den Figuren und in der dazugehörigen Beschreibung dargestellten und beschriebenen Ausführungsformen sind nur beispielhaft und keinesfalls einschränkend zu verstehen. Weitere Formen und Materialen des Verbindungselements und Varianten des Verbindungsverfahrens insbesondere des Festlegens des ersten Bauteil an das zweite Bauteil mit Hilfe des Verbindungselements sind durch die Ansprüche ebenfalls umfasst.

## Patentansprüche

1. Verfahren zur Herstellung einer formschlüssigen Verbindung zwischen einem ersten Bauteil (4) und einem zweiten Bauteil (8) einer Kraftfahrzeugbeleuchtungsvorrichtung mithilfe eines Verbindungselements (1), welches seitens des zweiten Bauteils (8) vorgesehen ist,
- wobei das erste Bauteil (4) als ein tragendes Bauteil des zweiten Bauteils (8) vorgesehen ist und eine Außenseite (4a) und eine Innenseite (4b) aufweist,
- wobei das erste Bauteil (4) an der Außenseite (4a) einen Befestigungsbereich (5) aufweist, welcher als eine Ausnehmung (6) ausgebildet ist, die als ein sich auf der Innenseite (4b) öffnendes Durchgangsloch (7) weitergeführt ist,
- wobei das Durchgangsloch (7) einen der Innenseite (4b) abgewandten Schulterbereich (2) aufweist,
- wobei der Ausnehmung (6) zumindest ein Abdeckteil (9), zugeordnet ist, wobei das zumindest eine Abdeckteil (9) aus einem flüssigkeitsabdichtenden Material ausgebildet ist,
umfassend folgende Schritte:
a) Anordnen des zweiten Bauteils (8) an einem Innenseitenöffnungsbereich (10) des Durchgangslochs (7) des ersten Bauteils (4),
b) Durchführen des Verbindungselements (1) durch das Durchgangsloch (7),
c) Festlegen des ersten Bauteils (4) an dem zweiten Bauteil (8) mithilfe eines Endteils (3) des Verbindungselements (1) durch Anlegen des Endteils (3) an den Schulterbereich (2) der Ausnehmung (6),
wobei das Verfahren **gekennzeichnet ist durch**
d) flüssigkeitsdichtes Abdecken der Ausnehmung (6) mithilfe des zumindest einen Abdeckteils (9) welches als Membran ausgeführt ist, wobei das Abdeckteil (9) nach dem Abdecken der Ausnehmung (6) über die Außenseite (4a) des ersten Bauteils (4) nicht herausragt.

2. Verfahren nach Anspruch 1, **dadurch gekennzeichnet, dass** das zumindest eine Abdeckteil (9) aus einem flüssigkeits- und luftabdichtenden oder einem luftabdichtenden Material ausgebildet ist.

3. Verfahren nach einem der Ansprüche 1 bis 2, **dadurch gekennzeichnet, dass** das Verbindungselement (1) getrennt vom zweiten Bauteil (8) ausgebildet ist.

4. Verfahren nach Anspruch 3, **dadurch gekennzeichnet, dass** das Verbindungselement (1) als eine Schraube und das Endteil (3) als ein Schraubenkopf ausgebildet ist, wobei das Durchführen der Schraube (1) durch das Durchgangsloch (7) ferner aufweist:
b1) Durchführen eines dem Schraubenkopf (3) gegenüberliegenden Endes (30) der Schraube (1) über die Außenseite (4a) des ersten Bauteils (4) durch das Durchgangsloch (7),
b2) Einschrauben der Schraube (1) in das zweite Bauteil (8).

5. Verfahren nach Anspruch 4, **dadurch gekennzeichnet, dass** die Schraube (1) ein Außengewinde (14) aufweist und das zweite Bauteil (8) auf einer der Innenseite (4b) des ersten Bauteils (4) zugewandten Seite (8a) vorgelocht ist, wobei das Vorloch (12) Innengewinde (13) aufweist, wobei das Außengewinde (14) und das Innengewinde (13) ineinander laufbar sind, und das Einschrauben der Schraube (1) in das zweite Bauteil (8) ferner aufweist:
b3) Ineingriffbringen des Außengewindes (14) mit dem Innengewinde (13).

6. Verfahren nach Anspruch 3, **dadurch gekennzeichnet, dass** das Verbindungselement als ein Niet (100) und das Endteil als ein Nietkopf (300) ausgebildet ist und das zweite Bauteil (8) auf einer der Innenseite (4b) des ersten Bauteils (4) zugewandten Seite (8a) vorgelocht ist, wobei das Verfahren ferner aufweist:
b1) Durchführen eines dem Nietkopf (300) gegenüberliegenden Endes (101) des Niets (100) über die Außenseite (4a) des ersten Bauteils (4) durch das Durchgangsloch (7),
b2) Einführen des dem Nietkopf (300) gegenüberliegenden Endes (101) des Niets (100) in das vorgelochte zweite Bauteils (8),
b3) Nieten des ersten Bauteils (4) mit dem zweiten Bauteil (8).

7. Verfahren nach einem der Ansprüche 1 bis 2, **dadurch gekennzeichnet, dass** das Verbindungselement (1) mit dem zweiten Bauteil (8) einstückig ausgebildet ist.

8. Verfahren nach Anspruch 7, **dadurch gekennzeichnet, dass** das Verbindungselement (1) durch den Innenseitenöffnungsbereich (10) des Durchgangslochs (7) des ersten Bauteils (4) in das Durchgangsloch (7) eingeführt wird.

9. Verfahren nach Anspruch 8, **dadurch gekennzeichnet, dass** das Anlegen des Endteils (3) des Verbindungselements (1) an den Schulterbereich (2) der Ausnehmung (6) ferner aufweist
c1) Heißverstemmen des Endteils (3).

10. Verfahren nach Anspruch 8, **dadurch gekennzeichnet, dass** das Anlegen des Endteils (3) des Verbindungselements (1) an den Schulterbereich (2) der Ausnehmung (6) ferner aufweist
c1) Laserschweißen des Endteils (3).

11. Bauteilverbund umfassend ein erstes Bauteil (4) einer Kraftfahrzeugbeleuchtungsvorrichtung, ein zweites Bauteil (8) der Kraftfahrzeugbeleuchtungsvorrichtung und ein Verbindungselement (1), welches seitens des zweiten Bauteils (8) vorgesehen ist, wobei das erste Bauteil (4) als ein tragendes Bauteil des zweiten Bauteils (8) vorgesehen ist und eine Außenseite (4a) und eine Innenseite (4b) aufweist, wobei das erste Bauteil (4) an der Außenseite (4a) einen Befestigungsbereich (5) aufweist, welcher als eine Ausnehmung (6) ausgebildet ist, die als ein sich auf der Innenseite (4b) öffnendes Durchgangsloch (7) weitergeführt ist, wobei das Durchgangsloch (7) einen der Innenseite (4b) abgewandten Schulterbereich (2) aufweist, **dadurch gekennzeichnet dass** der Ausnehmung (6) zumindest ein Abdeckteil (9) in Form einer Membran, zugeordnet ist, wobei das zumindest eine Abdeckteil (9) aus einem flüssigkeitsabdichtenden Material ausgebildet ist, wobei eine formschlüssige Verbindung zwischen dem ersten Bauteil (4) und dem zweiten Bauteil (8) mithilfe des Verfahrens nach einem der Ansprüche 1 bis 10 erzeugt wird.

12. Bauteilverbund nach Anspruch 11, **dadurch gekennzeichnet, dass** das erste Bauteil (4) als ein Gehäuse einer Fahrzeugleuchte und das zweite Bauteil (8) als ein Tragrahmen ausgebildet ist.

13. Bauteilverbund nach Anspruch 11, **dadurch gekennzeichnet, dass** das erste Bauteil als ein Kühlkörper (40) und das zweite Bauteil als ein Reflektor (80) ausgebildet ist.

14. Kraftfahrzeugbeleuchtungsvorrichtung mit zumindest einem Bauteilverbund nach einem der Ansprüche 11 bis 13.

## Claims

1. Method for producing a positive connection between a first component (4) and a second component (8) of a motor vehicle lighting device with the aid of a connecting element (1) which is provided on the part of the second component (8),
- wherein the first component (4) is provided as a supporting component of the second component (8) and having an outer side (4a) and an inner side (4b),
- wherein the first component (4) has, on the outer side (4a), a fixing portion (5) formed as a recess (6) which is continued as a through hole (7) opening on the inner side (4b),
- wherein the through hole (7) has a shoulder portion (2) facing away from the inner side (4b),
- wherein at least one cover part (9) is associated with the recess (6), wherein the at least one cover part (9) is formed from a liquid-sealing material,
comprising the following steps:
a) arranging the second component (8) at an inner side opening region (10) of the through hole (7) of the first component (4),
b) passing the connecting member (1) through the through hole (7),
c) fixing the first member (4) to the second member (8) by means of an end portion (3) of the connecting member (1) by abutting the end portion (3) against the shoulder portion (2) of the recess (6),
the method being **characterized by**
d) covering the recess (6) in a liquid-tight manner with the aid of the at least one covering part (9) which is designed as a membrane, the covering part (9) not projecting beyond the outer side (4a) of the first component (4) after the recess (6) has been covered.

2. Method according to claim 1, **characterized in that** the at least one covering part (9) is formed from a liquid- and air-sealing material or an air-sealing material.

3. Method according to any one of claims 1 to 2, **characterized in that** the connecting element (1) is formed separately from the second component (8).

4. Method according to claim 3, **characterized in that** the connecting element (1) is formed as a screw and the end part (3) is formed as a screw head, wherein passing the screw (1) through the through hole (7) further comprises:
b1) passing an end (30) of the screw (1) opposite to the screw head (3) over the outside (4a) of the first component (4) through the through hole (7),
b2) screwing the screw (1) into the second component (8).

5. Method according to claim 4, **characterized in that** the screw (1) has an external thread (14) and the second component (8) is pre-punched on a side (8a) facing the inner side (4b) of the first component (4), the pre-punched hole (12) having internal threads (13), the external thread (14) and the internal thread (13) being capable of running into one another, and the screwing of the screw (1) into the second component (8) further comprises:
b3) engaging the external thread (14) with the internal thread (13).

6. Method according to claim 3, **characterized in that** the connecting element is formed as a rivet (100) and the end part is formed as a rivet head (300) and the second component (8) is pre-punched on a side (8a) facing the inner side (4b) of the first component (4), the method further comprising:
b1) passing an end (101) of the rivet (100) opposite the rivet head (300) over the outer side (4a) of the first component (4) through the through hole (7),
b2) inserting the end (101) of the rivet (100) opposite the rivet head (300) into the pre-punched second component (8),
b3) riveting the first component (4) to the second component (8).

7. Method according to any one of claims 1 to 2, **characterized in that** the connecting element (1) is formed integrally with the second component (8).

8. Method according to claim 7, **characterized in that** the connecting element (1) is inserted into the through hole (7) through the inner side opening area (10) of the through hole (7) of the first component (4).

9. Method according to claim 8, **characterized in that** the abutment of the end portion (3) of the connecting member (1) against the shoulder portion (2) of the recess (6) further comprises c1) hot caulking of the end part (3).

10. Method according to claim 8, **characterized in that** the application of the end part (3) of the fastener (1) to the shoulder area (2) of the recess (6) further comprises c1) laser welding of the end part (3).

11. A composite component comprising a first component (4) of a motor vehicle lighting device, a second component (8) of the motor vehicle lighting device, and a connecting member (1) provided on the side of the second component (8), wherein the first component (4) is provided as a supporting component of the second component (8) and has an outer side (4a) and an inner side (4b), the first component (4) having on the outer side (4a) a fastening region (5) which is formed as a recess (6) which is continued as a through hole (7) opening on the inner side (4b), the through hole (7) having a shoulder region (2) facing away from the inner side (4b), **characterized in that** at least one covering part (9) in the form of a diaphragm is associated with the recess (6), the at least one covering part (9) being formed from a liquid-sealing material, a form-fitting connection being formed between the first component (4) and the second component (8) is produced by means of the method according to any one of claims 1 to 10.

12. A composite component according to claim 11, **characterized in that** the first component (4) is formed as a housing of a vehicle lamp and the second component (8) is formed as a support frame.

13. A composite component according to claim 11, **characterized in that** the first component is formed as a heat sink (40) and the second component is formed as a reflector (80).

14. Motor vehicle lighting device having at least one component composite according to any one of claims 11 to 13.

## Revendications

1. Procédé pour établir une liaison positive entre un premier composant (4) et un deuxième composant (8) d'un dispositif d'éclairage de véhicule automobile à l'aide d'un élément de liaison (1) qui est prévu sur la partie du deuxième composant (8),
- dans lequel le premier composant (4) est prévu comme un composant de support du deuxième composant (8) et ayant un côté extérieur (4a) et un côté intérieur (4b),
- dans lequel le premier composant (4) comporte, sur le côté extérieur (4a), une partie de fixation (5) formée comme un évidement (6) qui se poursuit comme un trou traversant (7) s'ouvrant sur le côté intérieur (4b),-dans lequel le trou traversant (7) est formé comme un trou traversant (7) s'ouvrant sur le côté intérieur (4b),-dans lequel le trou traversant (7) est formé comme un trou traversant (7) s'ouvrant sur le côté intérieur (4b)
- dans lequel le trou traversant (7) comporte une partie d'épaulement (2) orientée à l'opposé du côté intérieur (4b) en s'éloignant de la face intérieure (4b),
- dans lequel au moins une partie de couverture (9) est associée à l'évidement (6).
dans lequel la au moins une partie de couverture (9) est formée d'un matériau d'étanchéité aux liquides,
comprenant les étapes suivantes :
a) placer le second élément (8) au niveau d'une partie d'ouverture intérieure (10) du trou traversant (7) du premier élément (4),
b) faire passer l'élément de connexion (1) à travers le trou traversant (7),
c) fixer le premier élément (4) au second élément (8) au moyen d'une partie d'extrémité (3) de l'élément de liaison (1) en mettant en butée la partie d'extrémité (3) contre la partie d'épaulement (2) de l'évidement (6), le procédé étant **caractérisé par**
d) recouvrir l'évidement (6) de manière étanche aux liquides au moyen d'au moins une partie de recouvrement (9) conçue comme une membrane, la partie de recouvrement (9) ne dépassant pas de la face extérieure (4a) du premier composant (4) après le recouvrement de l'évidement (6).

2. Procédé selon la revendication 1, **caractérisé en ce que** la au moins une partie de couverture (9) est formée d'un matériau d'étanchéité aux liquides et à l'air ou d'un matériau d'étanchéité à l'air.

3. Procédé selon l'une quelconque des revendications 1 à 2, **caractérisé en ce que** la L'élément de liaison (1) est formé séparément du second composant (8).

4. Procédé selon la revendication 3, **caractérisé en ce que** l'élément de connexion (1) est formé comme une vis et la partie d'extrémité (3) est formée comme une tête de vis, dans lequel le passage de la vis (1) à travers le trou traversant (7) comprend en outre :
b1) faire passer une extrémité (30) de la vis (1) opposée à la tête de vis (3) à travers le trou traversant (7) via le côté extérieur (4a) du premier composant (4),
b2) visser la vis (1) dans le deuxième composant (8).

5. Procédé selon la revendication 4, **caractérisé en ce que** la vis (1) présente un filetage extérieur (14) et le deuxième composant (8) est pré-percé sur un côté (8a) faisant face au côté intérieur (4b) du premier composant (4), le trou pré-percé (12) présentant un filetage intérieur (13), le filetage extérieur (14) et le filetage intérieur (13) pouvant s'emboîter l'un dans l'autre, et le vissage de la vis (1) dans le deuxième composant (8) comprend en outre b3) engager le filetage externe (14) avec le filetage interne (13).

6. Procédé selon la revendication 3, **caractérisé en ce que** l'élément de liaison est formé comme un rivet (100) et la partie d'extrémité est formée comme une tête de rivet (300) et le deuxième composant (8) est pré-perforé sur un côté (8a) faisant face au côté intérieur (4b) du premier composant (4), le procédé comprenant en outre :
b1) passer une extrémité (101) du rivet (100) opposée à la tête de rivet (300) sur le côté extérieur (4a) du premier composant (4) à travers le trou traversant (7),
b2) insérer l'extrémité (101) du rivet (100) opposée à la tête de rivet (300) dans le deuxième composant pré-poinçonné (8),
b3) riveter le premier composant (4) au second composant (8).

7. Procédé selon l'une quelconque des revendications 1 à 2, **caractérisé en ce que** l'élément de liaison (1) est formé d'un seul tenant avec le deuxième composant (8).

8. Procédé selon la revendication 7, **caractérisé en ce que** l'élément de connexion (1) est inséré dans le trou traversant (7) à travers la zone d'ouverture latérale intérieure (10) du trou traversant (7) du premier composant (4).

9. Procédé selon la revendication 8, **caractérisé en ce que** la mise en butée de la partie d'extrémité (3) de l'élément de connexion (1) contre la partie d'épaulement (2) de l'évidement (6) comprend en outre
c1) calfeutrer à chaud la partie d'extrémité (3).

10. Procédé selon la revendication 8, **caractérisé en ce que** la mise en butée de la partie d'extrémité (3) de l'attache (1) contre la partie d'épaulement (2) de l'évidement (6) comprend en outre
c1) soudage au laser de la partie terminale (3).

11. Composant composite comprenant un premier composant (4) d'un dispositif d'éclairage de véhicule à moteur, un deuxième composant (8) du dispositif d'éclairage de véhicule à moteur, et un élément de connexion (1) prévu sur le côté du deuxième composant (8), dans lequel le premier composant (4) est prévu comme un composant de support du deuxième composant (8) et a un côté extérieur (4a) et un côté intérieur (4b) le premier composant (4) présente, sur la face extérieure (4a), une zone de fixation (5) qui est réalisée sous la forme d'un évidement (6) qui se prolonge par un trou traversant (7) débouchant sur la face intérieure (4b), le trou traversant (7) présentant une zone d'épaulement (2) opposée à la face intérieure (4b), **caractérisé en ce que** au moins une partie de recouvrement (9) sous la forme d'une membrane est associée à l'évidement (6), la au moins une partie de recouvrement (9) étant formée d'un matériau étanche aux liquides, une liaison par complémentarité de forme étant réalisée entre le premier composant (4) et le deuxième composant (8) à l'aide du procédé selon l'une des revendications 1 à 10.

12. Composant composite selon la revendication 11, **caractérisé en ce que** le premier composant (4) est formé comme un boîtier d'un feu de véhicule et le deuxième composant (8) est formé comme un cadre de support.

13. Composant composite selon la revendication 11, **caractérisé en ce que** le premier composant est formé comme un dissipateur thermique (40) et le second composant est formé comme un réflecteur (80).

14. Dispositif d'éclairage de véhicule automobile comprenant au moins un composant composite selon l'une quelconque des revendications 11 à 13.
